# EUROPÄISCHE PATENTSCHRIFT

(11) **EP 3 348 905 B1**
(45) Veröffentlichungstag und Bekanntmachung des Hinweises auf die Patenterteilung: **10.03.2021**
(21) Anmeldenummer: 18150279.0
(22) Anmeldetag: 04.01.2018
(51) Int. Cl.: F23J 3/06

(54) **BRENNKAMMERBAUGRUPPE**
COMBUSTION CHAMBER MODULE
ENSEMBLE CHAMBRE DE COMBUSTION

(30) Priorität: 11.01.2017 DE 102017100430
(43) Veröffentlichungstag der Anmeldung: 18.07.2018
(73) Patentinhaber: Eberspächer Climate Control Systems GmbH, 73730 Esslingen (DE)
(72) Erfinder: Eberspach, Günter, 72649 Wolfschlugen (DE)
(74) Vertreter: Ruttensperger Lachnit Trossin Gomoll

(56) Entgegenhaltungen:
- EP-A1- 0 638 776
- EP-A1- 2 930 425
- DE-A1- 3 713 448
- DE-A1- 10 200 962
- DE-A1-102006 000 074
- DE-A1-102010 033 688
- DE-A1-102012 215 414
- DE-B3- 10 255 361

## Beschreibung

Die vorliegende Erfindung betrifft eine Brennkammerbaugruppe für ein brennstoffbetriebenes Fahrzeugheizgerät, umfassend ein Brennkammergehäuse mit einer durch eine Umfangswandung und einen Bodenbereich begrenzten Brennkammer, wobei stromabwärts bezüglich der Brennkammer eine von Verbrennungsabgasen durchströmbare Oxidationskatalysatoranordnung vorgesehen ist.

Aus der nachveröffentlichten deutschen Patentanmeldung DE 10 2016 117 408 ist eine Brennkammerbaugruppe für ein brennstoffbetriebenes Fahrzeugheizgerät bekannt, bei welcher stromabwärts einer Brennkammer in einem zwischen einem Flammrohr und einem dieses umgebenden Gehäuse gebildeten Abgasrückströmungsraum eine Oxidationskatalysatoranordnung vorgesehen ist, um in einer katalytischen Reaktion in den die Brennkammer verlassenden Verbrennungsabgasen enthaltenes CO und HC zu CO₂ und H₂O umzusetzen. Zur Durchführung dieser katalytischen Reaktion ist es erforderlich, dass die Oxidationskatalysatoranordnung, insbesondere das beispielsweise auf einem Substrat getragene Katalysatormaterial, eine Temperatur von wenigstens 250°C bis 300°C aufweist. Liegt die Temperatur des Katalysatormaterials der Oxidationskatalysatoranordnung unter einer Anspringtemperatur in diesem Bereich, setzt die katalytische Reaktion nicht ein, und die Verbrennungsabgase verlassen ein mit einer derartigen Brennkammerbaugruppe ausgestattetes Heizgerät im Wesentlichen unbehandelt und mit hohem Schadstoffanteil.

Eine Brennkammerbaugruppe für ein brennstoffbetriebenes Fahrzeugheizgerät gemäß dem Oberbegriff des Anspruchs 1 ist aus der EP 0 638 776 A1 bekannt. Bei dieser Brennkammerbaugruppe ist der Abgasrückströmungsraum zur katalytischen Behandlung des diesen durchströmenden Abgases ausgebildet. Dazu kann die Außenumfangsfläche eines den Abgasrückströmungsraum nach radial innen begrenzenden Flammrohrs mit einer katalytischen Beschichtung überzogen sein. Bei einer alternativen Ausgestaltung kann im Abgasrückströmungsraum ein mit katalytisch wirksamem Material überzogenes Element angeordnet sein. Damit können im Abgas enthaltene Geruchsstoffe, wie zum Beispiel aromatische Kohlenwasserstoffe oder Schwefelwasserstoffe, aus dem Abgas entfernt werden. Das im Abgasrückströmungsraum angeordnete Element kann bei einer weiteren alternativen Ausgestaltung als Rußfilter aufgebaut sein

Die DE 10 2010 033 688 A1 offenbart ein Abgasnachbehandlungssystem für Verbrennungsmotoren, in welchem verschiedene Nachbehandlungseinheiten aufeinander folgend bzw. miteinander kombiniert vorgesehen sein können. Diese Nachbehandlungseinheiten können ausgebildet sein als Ammoniak-(NH₃)-Speicher, als Schwefelwasserstoff-(H₂S)-Speicher, als Kohlenwasserstoff-(HC)-Speicher bzw. als Sauerstoff-(O₂)-Speicher.

Es ist die Aufgabe der vorliegenden Erfindung, eine Brennkammerbaugruppe für ein brennstoffbetriebenes Fahrzeugheizgerät vorzusehen, mit welcher der Schadstoffausstoß im Verbrennungsbetrieb gesenkt werden kann. Erfindungsgemäß wird diese Aufgabe gelöst durch eine Brennkammerbaugruppe für ein brennstoffbetriebenes Fahrzeugheizgerät gemäß Anspruch 1. Diese Brennkammerbaugruppe umfasst ein Brennkammergehäuse mit einer durch eine Umfangswandung und einen Bodenbereich begrenzten Brennkammer, wobei stromabwärts bezüglich der Brennkammer eine von Verbrennungsabgasen durchströmbare Oxidationskatalysatoranordnung vorgesehen ist.

Die Brennkammerbaugruppe ist unter anderem dadurch gekennzeichnet, dass eine Kohlenwasserstoff-Speicheranordnung oder/und eine Stickoxid-Speicheranordnung vorgesehen ist.

Durch das Bereitstellen einer Kohlenwasserstoff-Speicheranordnung wird insbesondere in Betriebsphasen, in welchen aufgrund zu niedriger Temperatur des Katalysatormaterials der Oxidationskatalysatoranordnung die katalytisch unterstützte Umsetzung von CO und HC nicht erfolgt, Kohlenwasserstoff gespeichert bzw.

zwischengespeichert, so dass nach Erwärmung des Gesamtsystems und damit auch einsetzender Freigabe des in der Kohlenwasserstoff-Speicheranordnung gespeicherten Kohlenwasserstoffs dieser in der Oxidationskatalysatoranordnung umgesetzt werden kann.

Das Bereitstellen einer Stickoxid-Speicheranordnung ermöglicht es, unabhängig von weiteren Maßnahmen zur Verringerung des Stickoxidausstoßes, den Anteil des in den Verbrennungsabgasen nach außen transportierten Stickoxids grundsätzlich zu verringern. Gelangt die Stickoxid-Speicheranordnung in einen Sättigungszustand, in welchem eine weitere Aufnahme von Stickoxid nicht möglich ist, kann die Stickoxid-Speicheranordnung in einem Regenerationsbetrieb beispielsweise bei unterstöchiometrischen Verbrennungsbedingungen regeneriert werden.

Die Kohlenwasserstoff-Speicheranordnung umfasst vorzugsweise einen Kohlenwasserstoff-Speicherkatalysator. Um dabei zu gewährleisten, dass darin gespeicherter Kohlenwasserstoff im Wesentlichen nur dann wieder abgegeben wird, wenn die Oxidationskatalysatoranordnung zum Umsetzen des wieder freigegebenen Kohlenwasserstoffs vermittels der darin durchzuführenden katalytischen Reaktion in der Lage ist, wird weiter vorgeschlagen, dass eine Desorptionstemperatur des Kohlenwasserstoff-Speicherkatalysators über einer Anspringtemperatur der Oxidationskatalysatoranordnung liegt. Um dies zu gewährleisten, kann der Kohlenwasserstoff-Speicherkatalysator beispielsweise mit Zeolith-Material aufgebaut sein.

Die Stickoxid-Speicheranordnung kann einen Stickoxid-Speicherkatalysator umfassen. Um dabei zu gewährleisten, dass dieser in der Lage ist, Stickoxid in einem Temperaturbereich zu speichern, in welchem die Temperatur des Stickoxid-Speicherkatalysators im Verbrennungsbetrieb der Brennkammerbaugruppe im Allgemeinen sein wird, wird vorgeschlagen, dass der Stickoxid-Speicherkatalysator mit Barium aufgebaut ist.

Um sicherzustellen, dass einerseits aus der Kohlenwasserstoff-Speicheranordnung wieder freigegebener Kohlenwasserstoff in der Oxidationskatalysatoranordnung umgesetzt werden kann bzw. die Stickoxid-Speicheranordnung bei geeigneter Temperatur arbeiten kann, wird vorgeschlagen, dass die Kohlenwasserstoff-Speicheranordnung oder/und die Stickoxid-Speicheranordnung stromaufwärts bezüglich der Oxidationskatalysatoranordnung angeordnet ist.

Für eine hinsichtlich der für den Betrieb der verschiedenen Speicheranordnungen erforderlichen Temperatur optimale Anordnung derselben ist erfindungsgemäß weiter vorgesehen, dass ein in Richtung einer Gehäuselängsachse auf die Umfangswandung folgendes und einen in Richtung der Gehäuselängsachse offenen Abgasströmungsraum umgebendes Flammrohr vorgesehen ist, wobei zwischen dem Flammrohr und einem dieses umgebenden Gehäuse ein Abgasrückströmungsraum gebildet ist, wobei die Oxidationskatalysatoranordnung und die Kohlenwasserstoff-Speicheranordnung oder/und die Stickoxid-Speicheranordnung in dem Abgasrückströmungsraum angeordnet ist. Dabei ist eine derartige Anordnung gewählt, dass in einem ersten axialen Endbereich des Abgasrückströmungsraums der Abgasströmungsraum zum Abgasrückströmungsraum offen ist, und dass die Oxidationskatalysatoranordnung und die Kohlenwasserstoff-Speicheranordnung oder/und die Stickoxid-Speicheranordnung in einem zweiten axialen Endbereich des Abgasrückströmungsraums vorgesehen sind.

Um bei dem erfindungsgemäßen Aufbau einer Brennkammerbaugruppe eine optimale thermische Wechselwirkung für die Oxidationskatalysatoranordnung bzw. die verschiedenen Speicheranordnungen erreichen zu können, ist weiter vorgesehen, dass ein die Umfangswandung umgebender Verbrennungsluftzuführraum über eine Mehrzahl von in der Umfangswandung vorgesehenen Verbrennungsluftzuführöffnungen zur Brennkammer offen ist, und dass eine den Verbrennungsluftzuführraum vom Abgasrückströmungsraum trennende Trennwandung vorgesehen ist, wobei die Oxidationskatalysatoranordnung die Trennwandung umgebend angeordnet ist. Weiter kann dabei vorgesehen sein, dass die Oxidationskatalysatoranordnung an die Trennwandung axial anschließend angeordnet ist, oder/und dass auch die Kohlenwasserstoff-Speicheranordnung oder/und die Stickoxid Speicheranordnung die Trennwandung umgebend angeordnet ist. Insbesondere kann dabei vorgesehen sein, dass die Oxidationskatalysatoranordnung oder/und die Kohlenwasserstoff-Speicheranordnung oder/und die Stickoxid-Speicheranordnung zwischen der Trennwandung und dem Gehäuse angeordnet ist.

Zur weiteren Verringerung des Stickoxidausstoßes kann bei der erfindungsgemäß aufgebauten Brennkammerbaugruppe eine Flammblende mit einer Durchströmöffnung vorgesehen sein, wobei im axialen Bereich der Flammblende eine Abgasrückführöffnungsanordnung zur Rückführung von in dem Abgasrückströmungsraum strömenden Verbrennungsabgasen in die Brennkammer oder/und den Abgasströmungsraum vorgesehen ist.

Bei der erfindungsgemäßen Brennkammerbaugruppe kann der Bodenbereich einen Verdampfermediumträger und an einer der Brennkammer zugewandten Seite des Verdampfermediumträgers poröses Verdampfermedium umfassen. Das Gehäuse kann ein im Wesentlichen topfartiges Wärmetauschergehäuse mit einer einem Flammrohr axial gegenüberliegenden Bodenwandung und einer das Flammrohr umgebenden und den Abgasrückströmungsraum nach radial außen begrenzenden Wärmetauschergehäuse-Umfangswandung sein.

Die Erfindung betrifft ferner ein Fahrzeugheizgerät, umfassend eine erfindungsgemäß aufgebaute Brennkammerbaugruppe.

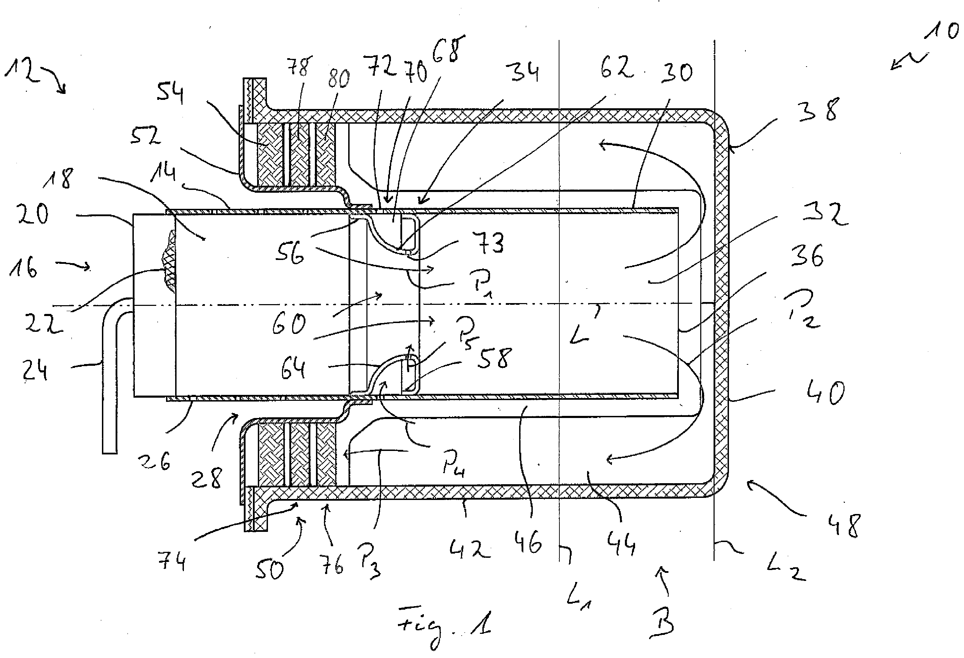

Die Erfindung wird nachfolgend mit Bezug auf die Fig. 1 detailliert beschrieben, welche eine Längsschnittansicht einer brennstoffbetriebenen Brennkammerbaugruppe für ein Fahrzeugheizgerät darstellt.

Die in Fig. 1 dargestellte Brennkammerbaugruppe 10 umfasst ein allgemein mit 12 bezeichnetes Brennkammergehäuse. Das Brennkammergehäuse 12 umgrenzt mit einer Umfangswandung 14 und einem Bodenbereich 16 eine Brennkammer 18. Der Bodenbereich 16 kann mit einem beispielsweise topfartig ausgebildeten Verdampfermediumträger 20 und einem an dessen der Brennkammer 18 zugewandten Seite getragenen porösen Verdampfermedium 22 aufgebaut sein. Über eine Brennstoffzuführleitung 24 wird von einer Brennstoffzuführanordnung, beispielsweise Dosierpumpe, zugeführter flüssiger Brennstoff in das poröse Verdampfermedium 22 eingespeist und von diesem in Richtung zur Brennkammer 18 abgedampft. Um insbesondere in einer Startphase des Verbrennungsbetriebs die Brennstoffabdampfung zu unterstützen, kann der Bodenbereich 16 an der von der Brennkammer 18 abgewandten Seite des porösen Verdampfermediums 22 oder/und des Verdampfermediumträgers 20 eine elektrisch erregbare Heizeinrichtung umfassen.

Zur Zufuhr von Verbrennungsluft in die Brennkammer 18 weist die Umfangswandung 14 eine Mehrzahl von Verbrennungsluftzuführöffnungen 26 auf. Über diese Verbrennungsluftzufuhröffnungen 26 ist ein die Umfangswandung 14 bzw. die Brennkammer 18 vorzugsweise ringartig umgebender Verbrennungsluftzuführraum 28 zur Brennkammer 18 offen. Durch eine nicht dargestellte Verbrennungsluftzuführanordnung, beispielsweise Seitenkanalgebläse, kann die für die Verbrennung erforderliche Luft in Richtung zum Verbrennungsluftzuführraum 28 gefördert werden.

Ein im dargestellten Ausgestaltungsbeispiel mit der Umfangswandung 14 integral ausgebildetes Flammrohr 30 schließt in Richtung einer Gehäuselängsachse L an die Umfangswandung 14 an. Im Inneren des Flammrohrs 30 ist ein Abgasströmungsraum 32 gebildet, in welchen die die Brennkammer 18 im Bereich einer allgemein mit 34 bezeichneten Flammblende verlassenden Verbrennungsabgase, wie durch Strömungspfeile P₁ angedeutet, eintreten. Es ist darauf hinzuweisen, dass im Sinne der vorliegenden Erfindung die im Wesentlichen in Richtung der Gehäuselängsachse L aus der Brennkammer 18 in den Abgasströmungsraum 32 strömenden Verbrennungsabgase in diesem Bereich der Brennkammerbaugruppe 10 eine Strömungsrichtung und, bezogen auf diese Strömungsrichtung, stromaufwärts bzw. stromabwärts positionierte Systembereiche definieren.

Der Abgasströmungsraum 32 ist an einem von der Umfangswandung 14 entfernt liegenden axialen Endbereich 36 des Flammrohrs 30 offen. Das Flammrohr 30 bzw. das Brennkammergehäuse 12 ist von einem topfartigen Gehäuse 38 umgeben, welches eine dem axialen Endbereich 36 des Flammrohrs 30 gegenüberliegende Bodenwandung 40 und eine das Flammrohr 30 bzw. bereichsweise auch die Umfangswandung 14 radial außen umgebende Wärmetauschergehäuse-Umfangswandung 42 aufweist. Das Gehäuse 38 kann das Innere von ineinander eingesetzten topfartigen Wärmetauschergehäusen sein, welche zwischen sich einen Strömungsraum für ein flüssiges Wärmeträgermedium begrenzen. Wird die Brennkammerbaugruppe 10 in Verbindung mit einem Luftheizgerät eingesetzt, kann das Gehäuse 38 an seiner vom Flammrohr 30 abgewandten Außenseite von der zu erwärmenden Luft umströmt werden. Um den Wärmeübertrag von den Verbrennungsabgasen auf das Gehäuse 38 zu verbessern, kann dieses an seiner dem Flammrohr 30 zugewandten Innenseite im Bereich der Bodenwandung 40 oder/und im Bereich der Wärmetauschergehäuse-Umfangswandung 42 Wärmeübertragungsrippen 44 aufweisen.

Die den Abgasströmungsraum 32 am axialen Endbereich 36 des Flammrohrs 30 verlassenden Verbrennungsabgase werden, wie durch Strömungspfeile P₂ angedeutet, an der Bodenwandung 40 axial umgelenkt und treten somit in einen Abgasrückströmungsraum 46 im Bereich von dessen ersten axialen Endbereich 48 ein. Wie durch einen Strömungspfeil P₃ angedeutet, strömen die Verbrennungsabgase in Richtung auf einen zweiten axialen Endbereich 50 des Abgasrückströmungsraums 46 zu. Dieser zweite axiale Endbereich 50 des Abgasrückströmungsraums 46 kann mit der Brennkammer 18 bzw. der Umfangswandung 14 sich zumindest bereichsweise axial überlappend positioniert sein.

In dem zweiten axialen Endbereich 50 ist der Abgasrückströmungsraum 46 nach radial innen und in axialer Richtung durch eine außen an die Umfangswandung 14 bzw. das Flammrohr 30 angebundene Trennwandung 52 begrenzt. Die Trennwandung 52 trennt somit in diesem zweiten axialen Endbereich 50 den Abgasrückströmungsraum 46 vom Verbrennungsluftzuführraum 28.

In diesem Bereich des Abgasrückströmungsraums 46 kann eine beispielweise ringartig ausgestaltete Oxidationskatalysatoranordnung 54 unter leichter Presspassung zwischen der Trennwandung 52 und der Wärmetauschergehäuse-Umfangswandung 42 gehalten sein. Die Oxidationskatalysatoranordnung 54 kann beispielsweise ein mit katalytisch wirksamen Material, wie z.B. Platin oder Palladium, beschichtetes Edelstahlgeflecht aufweisen. Die den Abgasrückströmungsraum 46 durchströmenden Verbrennungsabgase bzw. zumindest ein Teil davon durchströmen die Katalysatoranordnung 54, so dass bei der an der Oberfläche des katalytischen Materials ablaufenden Reaktion in den Verbrennungsabgasen enthaltenes CO und HC zu CO₂ und H₂O reagieren, so dass der Schadstoffausstoß gesenkt wird. Nach Durchströmen der Oxidationskatalysatoranordnung 54 verlassen die Verbrennungsabgase den Abgasrückströmungsraum 46 beispielsweise axial im Bereich einer in der Trennwandung 52 vorgesehenen Öffnung zu einem Abgasführungssystem hin.

Ein Teil der bei der katalytischen Reaktion entstehenden Wärme kann einerseits auf die im Verbrennungsluftzuführraum 28 in Richtung zur Brennkammer 18 strömende Verbrennungsluft übertragen werden, um diese vorzuwärmen. Ein weiterer Teil der Reaktionswärme kann auf die Wärmetauschergehäuse-Umfangswandung 42 und über diese auf das zu erwärmende Wärmeträgermedium übertragen werden. Auf diese Art und Weise wird einerseits die Oxidationskatalysatoranordnung 54 gekühlt und vor Überhitzung geschützt, andererseits wird die in der katalytischen Reaktion generierte Wärme effizient genutzt.

Die im Wesentlichen einen Bereich des Übergangs von der Brennkammer 18 zum Abgasströmungsraum 32 definierende Flammblende 34 ist mit zwei in Richtung der Gehäuselängsachse L zueinander versetzt liegenden Verbindungsbereichen 56, 58 an die Umfangswandung 14 bzw. Flammrohr 30 angebunden. Ausgehend von dem der Brennkammer 18 zugewandt liegenden, stromaufwärtigen Verbindungsbereich 56 verjüngt sich eine in der Flammblende 34 ausgebildete Durchströmöffnung 60 bis zu einer im Bereich eines Scheitelbereichs 62 der Flammblende 34 bereitgestellten minimalen Strömungsquerschnittsfläche. Im Bereich zwischen dem stromaufwärtigen Verbindungsbereich 56 und dem Scheitelbereich 62 stellt die Flammblende 34 eine Strömungsführungswandung 64 bereit. Diese ist konvex gekrümmt, so dass zwischen dem stromaufwärtigen Verbindungsbereich 56 und dem Scheitelbereich 62 die Änderungsrate der Strömungsquerschnittsfläche abnimmt. In dem Bereich der Strömungsführungswandung 64, welcher an den stromaufwärtigen Verbindungsbereich 56 angrenzt, ist die Abnahme der Strömungsquerschnittsfläche, bezogen auf eine Längeneinheit in Richtung der Gehäuselängsachse L, maximal. Im Bereich des Scheitelbereichs 62 ist die Änderungsrate minimal bzw. bei null.

Angrenzend an den Scheitelbereich 62 stellt die Flammblende 34 im Übergang zum Flammrohr 30 eine stufenartige Erweiterung der Strömungsquerschnittsfläche bereit.

Die mit ihrer vorangehend beschriebenen Geometrie nach Art einer Venturi-Düse ausgebildete Flammblende 34 begrenzt zusammen mit dem diese umgebenden Bereich der Umfangswandung 14 bzw. des Flammrohrs 30 einen die Gehäuselängsachse L vorzugsweise unterbrechungsfrei und ringartig umgebenden Abgasüberführungsraum 68. Eine Abgasrückführöffnungsanordnung 70 umfasst in der Umfangswandung 14 bzw. im Flammrohr 30, grundsätzlich also einer den Abgasüberführungsraum 68 nach radial außen begrenzenden Wandung, eine Mehrzahl von in Umfangsrichtung vorzugsweise in ringartiger Struktur aufeinanderfolgend angeordneten ersten Abgasrückführöffnungen 72. Über die ersten Abgasrückführöffnungen 72 ist der Abgasrückströmungsraum 46 zum Abgasüberführungsraum 68 offen. Die Abgasrückführöffnungsanordnung 70 umfasst ferner eine Mehrzahl von in Umfangsrichtung vorzugsweise in ringartiger Struktur aufeinanderfolgend angeordneten zweiten Abgasrückführöffnungen 73 in der Flammblende 34, insbesondere im Scheitelbereich 62 derselben. Über die zu den ersten Abgasrückführöffnungen 72 in Richtung der Gehäuselängsachse L versetzt angeordneten zweiten Abgasrückführöffnungen 73 ist der Abgasüberführungsraum 68 zur Brennkammer 18 bzw. zum Abgasströmungsraum 32 offen, insbesondere in einem Übergangsbereich von der Brennkammer 18 zum Abgasströmungsraum 32. Der Abgasüberführungsraum 68 stellt somit über die Abgasrückführöffnungsanordnung 70 eine Verbindung zwischen dem Abgasrückströmungsraum 46 und der Brennkammer 18 bzw. dem Abgasströmungsraum 32 bereit.

Bei im Wesentlichen in der Brennkammer 18 ablaufender Verbrennung strömen die Verbrennungsabgase durch die Durchströmöffnung 60. Aufgrund der abnehmenden Strömungsquerschnittsfläche und des so generierten Venturi-Effekts entsteht ein Unterdruck bezüglich des Abgasüberführungsraums 68. Dies bedeutet, dass über die ersten Abgasrückführöffnungen 72 in den Abgasüberführungsraum 68 gesaugte Verbrennungsabgase, wie durch Strömungspfeile P₄ und P₅ angedeutet, in den Bereich der Brennkammer 18 bzw. in den Bereich des Abgasströmungsraum 32 gelangen und somit in den Verbrennungsprozess rückgespeist werden. Durch diese Rückspeisung von Verbrennungsabgasen kann der Schadstoffausstoß, insbesondere der NOx- Anteil in den Verbrennungsabgasen, deutlich gemindert werden. Dazu trägt im Wesentlichen bei, dass der größte Teil der in den Verbrennungsabgasen transportierten Wärme nahe dem ersten axialen Endbereich 48 des Abgasrückströmungsraums 46 über das Gehäuse 38 auf das Wärmeträgermedium übertragen wird. In einem zwischen zwei Linien L₁, L₂ eingegrenzten axialen Bereich B, welcher etwa 1/3 der axialen Erstreckung des Abgasrückströmungsraum 46 umfasst, werden etwa 80 % der zu übertragenden Wärme auf das Gehäuse 38 und somit das Wärmeträgermedium übertragen. Im Bereich der Abgasrückführöffnungsanordnung 70 sind die Verbrennungsabgase somit bereits deutlich abgekühlt, so dass deren Rückspeisung in den Verbrennungsprozess aufgrund der dadurch hervorgerufenen Absenkung der Verbrennungstemperatur zu einem verringerten NOx-Anteil in den Verbrennungsabgasen beiträgt.

Um bei der Brennkammerbaugruppe 10 auch in einem Betriebszustand, in welchem die Temperatur des Katalysatormaterials der Oxidationskatalysatoranordnung 24 unter der Anspringtemperatur von 250°C bis 300°C ist, welche erforderlich ist, um die katalytische Reaktion zum Umsetzen von CO und HC durchzuführen, den Ausstoß von HC, allgemein also Kohlenwasserstoffe, weitestgehend zu verhindern, ist stromaufwärts bezüglich der Oxidationskatalysatoranordnung 54 eine Kohlenwasserstoff-Speicheranordnung 74 vorgesehen, welche beispielsweise einen mit einem mit Zeolith-Material beschichteten Träger, z.B. aus Edelstahl, aufgebauten Kohlenwasserstoff-Speicherkatalysator 78 umfassen kann. Auch die Kohlenwasserstoff-Speicheranordnung 74 ist vorteilhafterweise nahe dem zweiten axialen Endbereich 50 des Abgasrückströmungsraums 46 im Bereich zwischen der Trennwandung 52 und der Umfangswandung 42 angeordnet bzw. ist zwischen diesen beiden Wandungen gehalten.

Der Kohlenwasserstoff-Speicherkatalysator 78 der Kohlenwasserstoff-Speicheranordnung 74 weist eine Desorptionstemperatur im Bereich von 300°C bis 350°C auf. Diese Desorptionstemperatur liegt also über der Anspringtemperatur der Oxidationskatalysatoranordnung 54. Auf diese Art und Weise ist gewährleistet, dass in der Kohlenwasserstoff-Speicheranordnung 74 gespeicherter Kohlenwasserstoff erst dann wieder desorbiert, also aus der Kohlenwasserstoff-Speicheranordnung 74 abgegeben wird und zur Oxidationskatalysatoranordnung 54 gelangen kann, wenn diese eine ausreichend hohe Temperatur zur Durchführung der katalytischen Reaktion aufweist. Es sind somit keine ansteuerungstechnischen oder regelungstechnischen Maßnahmen erforderlich, um diesen Mechanismus, also das Speichern bzw. Freigeben von Kohlenwasserstoff in der Kohlenwasserstoff-Speicheranordnung 74, auszulösen. Allein der bei Inbetriebnahme eines mit der Brennkammerbaugruppe 12 aufgebauten Fahrzeugheizgeräts sich einstellende Temperaturanstieg sowohl im Bereich der Oxidationskatalysatoranordnung 54 als auch im Bereich der Kohlenwasserstoff-Speicheranordnung 74 sorgt dafür, dass zunächst die Anspringtemperatur der Oxidationskatalysatoranordnung 54 erreicht wird und dann, wenn die Temperatur der Oxidationskatalysatoranordnung 54 bei bzw. über der Anspringtemperatur liegt, die Desorptionstemperatur der Kohlenwasserstoff-Speicheranordnung 74 erreicht wird und aus dieser freigegebener Kohlenwasserstoff mit dem in den Verbrennungsabgasen transportierten, nicht verbrannten Restsauerstoff in der Oxidationskatalysatoranordnung umgesetzt wird.

Es sei hier darauf hingewiesen, dass die Oxidationskatalysatoranordnung 54 und die Kohlenwasserstoff-Speicheranordnung 74 baulich miteinander verschmolzen werden können. Beispielsweise kann die Kohlenwasserstoff-Speicheranordnung 74 zumindest bereichsweise mit dem Katalysatormaterial der Oxidationskatalysatoranordnung 54 beschichtet sein, so dass im gleichen räumlichen Bereich Kohlenwasserstoff gespeichert, wieder freigegeben und am Katalysatormaterial der Oxidationskatalysatoranordnung umgesetzt werden kann.

Bei der erfindungsgemäß aufgebauten Brennkammerbaugruppe 12 ist ferner eine allgemein mit 76 bezeichnete Stickoxid-Speicheranordnung vorgesehen, welche beispielsweise einen Stickoxid-Speicherkatalysator 80 umfassen kann. Dieser kann mit Barium aufgebaut sein und somit in einer sauerstoffreichen, mageren Atmosphäre Stickoxide speichern. Auch die Stickoxid-Speicheranordnung 76 ist vorzugsweise im zweiten axialen Endbereich 50 zwischen der Trennwandung 52 und der Umfangswandung 42 angeordnet. Durch diese Positionierung der Stickoxid-Speicheranordnung 76 wird gewährleistet, dass diese im normalen Betrieb der Brennkammerbaugruppe 12 eine Temperatur im Bereich von 250°C bis 500°C aufweist, also eine Temperatur in einem Bereich, in welchem der Stickoxid-Speicherkatalysator 80 dazu in der Lage ist, durch das Bilden von Bariumnitrat Stickoxide zu speichern.

Gelangt der Stickoxid-Speicherkatalysator in einen Sättigungszustand, was beispielsweise sensorisch erfasst werden kann oder durch Überwachen der Betriebszeiten ermittelt werden kann, kann durch Betreiben des Fahrzeugheizgeräts unter leicht unterstöchiometrischen Verbrennungsbedingungen, also mit einem brennstoffreichen, fetten Gemisch aus Brennstoff und Verbrennungsluft, durch die reduzierende Wirkung der in den Verbrennungsabgasen transportierten Kohlenwasserstoffe oder/und darin enthaltenem CO eine Abgabe von Stickoxid-Molekülen in den Abgasstrom und eine Reduktion zu Stickstoff erreicht werden.

Es sei darauf hingewiesen, dass das Bereitstellen einer Stickoxid-Speicheranordnung 76 zusätzlich zu den vorangehend beschriebenen Maßnahmen zu Rückspeisung von Stickoxid in den Verbrennungsprozess oder alternativ dazu erfolgen kann. Ferner ist darauf hinzuweisen, dass auch für die Stickoxid-Speicheranordnung 76 eine andere Positionierung als in Fig. 1 dargestellt gewählt werden kann. Beispielsweise könnte diese auch stromabwärts der Kohlenwasserstoff-Speicheranordnung 74, beispielsweise zwischen dieser und der Oxidationskatalysatoranordnung 54 oder stromabwärts der Oxidationskatalysatoranordnung 54 vorgesehen werden, wenn dies aus Gründen der für das Speichern von Stickoxiden optimalen Betriebstemperatur der Stickoxid-Speicheranordnung 76 vorteilhaft ist. Das Positionieren der Stickoxid-Speicheranordnung 76 stromaufwärts bezüglich der Oxidationskatalysatoranordnung 54 kann in vorteilhafter Weise dazu genutzt werden, bei der Regeneration des Stickoxid-Speicherkatalysators 80 vorhandene, überschüssige Kohlenwasserstoffe durch einen in die Oxidationskatalysatoranordnung 54 integrierten Sauerstoffspeicher, z. B. Cer, in Wasser und Kohlendioxid umzuwandeln.

Mit der erfindungsgemäß aufgebauten Brennkammerbaugruppe 10 kann sowohl durch die aufgrund der speziellen Geometrie der Flammblende 34 erzwungene Rückspeisung von Verbrennungsabgasen in den Verbrennungsprozess, als auch durch das Durchströmen einer Katalysatoranordnung vor dem Austritt der Verbrennungsabgase aus der Brennkammerbaugruppe 10 ein deutlich gesenkter Schadstoffausstoß erreicht werden. Vorteilhafterweise sind diese beiden Maßnahmen in der Brennkammerbaugruppe 10 in Verbindung miteinander vorgesehen. Jede der Maßnahmen kann jedoch auch für sich alleine, ohne dass notwendigerweise auch die andere Maßnahme vorgesehen ist, einen verringerten Schadstoffanteil in den aus der Brennkammerbaugruppe 10 ausgestoßenen Abgasen bewirken.

Abschließend wird darauf hingewiesen, dass die vorangehend beschriebene Brennkammerbaugruppe in verschiedensten Aspekten variiert werden kann, ohne von der vorliegenden Erfindung abzuweichen. So könnte beispielsweise die Flammblende mit der die Brennkammer umgebenden Umfangswandung integral ausgebildet sein oder/und könnte mit dem axial auf diese Umfangswandung folgenden Flammrohr integral ausgebildet sein. Auch müssen nicht notwendigerweise die Umfangswandung und das Flammrohr durch ein einziges Bauteil als integrale Bestandteile desselben bereitgestellt sein. So könnte beispielsweise das Flammrohr auch integral mit der Trennwandung aufgebaut sein. Auch die Flammblende könnte als integraler Bestandteil der Trennwandung bereitgestellt sein, während die Umfangswandung und das Flammrohr als separate Bauteile vorgesehen sind. Das Anbinden der Flammblende beispielsweise an das Flammrohr oder die Umfangswandung umfasst im Sinne der vorliegenden Erfindung also sowohl das Verbinden zweier getrennter Bauteile, beispielsweise durch Materialschluss, als auch das integrale Bereitstellen zweier Systembereiche wie zum Beispiel Flammblende und Umfangswandung, als Bestandteile eines Bauteils.

## Patentansprüche

1. Brennkammerbaugruppe für ein brennstoffbetriebenes Fahrzeugheizgerät, umfassend ein Brennkammergehäuse (12) mit einer durch eine Umfangswandung (14) und einen Bodenbereich (16) begrenzten Brennkammer (18), wobei ein in Richtung einer Gehäuselängsachse (L) auf die Umfangswandung (14) folgendes und einen in Richtung der Gehäuselängsachse (L) offenen Abgasströmungsraum (32) umgebendes Flammrohr (30) vorgesehen ist, wobei zwischen dem Flammrohr (30) und einem dieses umgebenden Gehäuse (38) ein Abgasrückströmungsraum (46) gebildet ist, wobei in einem ersten axialen Endbereich (48) des Abgasrückströmungsraums (46) der Abgasströmungsraum (32) zum Abgasrückströmungsraum (46) offen ist, wobei stromabwärts bezüglich der Brennkammer (18) eine von Verbrennungsabgasen durchströmbare Oxidationskatalysatoranordnung (54) in dem Abgasrückströmungsraum (46) vorgesehen ist, **dadurch gekennzeichnet, dass** die Oxidationskatalysatoranordnung (54) und eine Kohlenwasserstoff-Speicheranordnung (74) oder/und eine Stickoxid-Speicheranordnung (76) in einem zweiten axialen Endbereich (50) des Abgasrückströmungsraums (46) vorgesehen sind, dass ein die Umfangswandung (14) umgebender Verbrennungsluftzuführraum (28) über eine Mehrzahl von in der Umfangswandung (14) vorgesehenen Verbrennungsluftzuführöffnungen (26) zur Brennkammer (18) offen ist, und dass eine den Verbrennungsluftzuführraum (28) vom Abgasrückströmungsraum (46) trennende Trennwandung (52) vorgesehen ist, wobei die Oxidationskatalysatoranordnung (54) die Trennwandung (52) umgebend angeordnet ist.

2. Brennkammerbaugruppe nach Anspruch 1, **dadurch gekennzeichnet, dass** die Kohlenwasserstoff-Speicheranordnung (74) einen Kohlenwasserstoff-Speicherkatalysator (78) umfasst, wobei vorzugsweise eine Desorptionstemperatur des Kohlenwasserstoff-Speicherkatalysators (78) über einer Anspringtemperatur der Oxidationskatalysatoranordnung (54) liegt.

3. Brennkammerbaugruppe nach Anspruch 2, **dadurch gekennzeichnet, dass** der Kohlenwasserstoff-Speicherkatalysator (78) mit Zeolith-Material aufgebaut ist.

4. Brennkammerbaugruppe nach einem der vorangehenden Ansprüche, **dadurch gekennzeichnet, dass** die Stickoxid-Speicheranordnung (76) einen Stickoxid-Speicherkatalysator (80) umfasst,.

5. Brennkammerbaugruppe nach Anspruch 4, **dadurch gekennzeichnet, dass** der Stickoxid-Speicherkatalysator (80) mit Barium aufgebaut ist.

6. Brennkammerbaugruppe nach einem der vorangehenden Ansprüche, **dadurch gekennzeichnet, dass** die Kohlenwasserstoff-Speicheranordnung (74) oder/und die Stickoxid-Speicheranordnung (76) stromaufwärts bezüglich der Oxidationskatalysatoranordnung (54) angeordnet ist.

7. Brennkammerbaugruppe nach einem der vorangehenden Ansprüche, **dadurch gekennzeichnet, dass** die Oxidationskatalysatoranordnung (54) an die Trennwandung (52) axial anschließend angeordnet ist, oder/und dass die Kohlenwasserstoff-Speicheranordnung (74) oder/und die Stickoxid-Speicheranordnung (76) die Trennwandung (52) umgebend angeordnet ist.

8. Brennkammerbaugruppe nach Anspruch 7, **dadurch gekennzeichnet, dass** die Oxidationskatalysatoranordnung (54) oder/und die Kohlenwasserstoff-Speicheranordnung (74) oder/und die Stickoxid-Speicheranordnung (76) zwischen der Trennwandung (52) und dem Gehäuse (38) angeordnet ist.

9. Brennkammerbaugruppe nach einem der vorangehenden Ansprüche, **dadurch gekennzeichnet, dass** eine Flammblende (34) mit einer Durchströmöffnung (60) vorgesehen ist, und dass im axialen Bereich der Flammblende (34) eine Abgasrückführöffnungsanordnung (70) zur Rückführung von in dem Abgasrückströmungsraum (46) strömenden Verbrennungsabgasen in die Brennkammer (18) oder/und den Abgasströmungsraum (32) vorgesehen ist.

10. Brennkammerbaugruppe nach einem der vorangehenden Ansprüche, **dadurch gekennzeichnet, dass** der Bodenbereich (16) einen Verdampfermediumträger (20) und an einer der Brennkammer (18) zugewandten Seite des Verdampfermediumträgers (20) poröses Verdampfermedium (22) umfasst, oder/und dass das Gehäuse (38) ein im Wesentlichen topfartiges Wärmetauschergehäuse mit einer einem Flammrohr (30) axial gegenüberliegenden Bodenwandung (40) und einer das Flammrohr (30) umgebenden und den Abgasrückströmungsraum (46) nach radial außen begrenzenden Wärmetauschergehäuse-Umfangswandung (42) ist.

11. Fahrzeugheizgerät, umfassend eine Brennkammerbaugruppe (10) nach einem der vorangehenden Ansprüche.

## Claims

1. Combustion chamber assembly unit for a fuel-operated vehicle heater, comprising a combustion chamber housing (12) with a combustion chamber (18) defined by a circumferential wall (14) and by a bottom area (16), wherein a flame tube (30) is provided, which follows the circumferential wall (14) in the direction of a housing longitudinal direction (L) and surrounds a waste gas flow space (32), which is open in the direction of the housing longitudinal axis (L), wherein a waste gas backflow space (46) is formed between the flame tube (30) and a housing (38) surrounding the latter, wherein the waste gas flow space (32) is open to the waste gas backflow space (46) in a first axial end area (48) of the waste gas backflow space (46), wherein an oxidation catalytic converter device (54), through which combustion waste gases can flow, is provided in the waste gas backflow space (46) downstream in relation to the combustion chamber (18),
**characterized in that**
the oxidation catalytic converter device (54) and a hydrocarbon storage device (74) or/and a nitrogen oxide storage device (76) are provided in a second axial end region (50) of the waste gas backflow space (46),
that a combustion air feed space (28) surrounding the circumferential wall (14) is open to the combustion chamber (18) via a plurality of combustion air feed openings (26) provided in the circumferential wall (14), and that a partition (52) separating the combustion air feed space (28) from the waste gas backflow space (46) is provided, wherein the oxidation catalytic converter device (54) is arranged such that it surrounds the partition (52).

2. Combustion chamber assembly unit in accordance with claim 1, **characterized in that** the hydrocarbon storage device (74) comprises a hydrocarbon storage catalyst (78), wherein preferably a desorption temperature of the hydrocarbon storage catalyst (78) is above a light-off temperature of the oxidation catalytic converter device (54).

3. Combustion chamber assembly unit in accordance with claim 2, **characterized in that** the hydrocarbon storage catalyst (78) is made with zeolite material.

4. Combustion chamber assembly unit in accordance with one of the preceding claims, **characterized in that** the nitrogen oxide storage device (76) comprises a nitrogen oxide storage catalyst (80).

5. Combustion chamber assembly unit in accordance with claim 4, **characterized in that** the nitrogen oxide storage catalyst (80) is made with barium.

6. Combustion chamber assembly unit in accordance with one of the preceding claims, **characterized in that** the hydrocarbon storage device (74) or/and the nitrogen oxide storage device (76) is arranged upstream in relation to the oxidation catalytic converter device (54).

7. Combustion chamber assembly unit in accordance with one of the preceding claims, **characterized in that** the oxidation catalytic converter device (54) is arranged such that it axially adjoins the partition (52) or/and that the hydrocarbon storage device (74) or/and the nitrogen oxide storage device (76) is arranged such that it surrounds the partition (52).

8. Combustion chamber assembly unit in accordance with claim 7, **characterized in that** the oxidation catalytic converter device (54) or/and the hydrocarbon storage device (74) or/and the nitrogen oxide storage device (76) is arranged between the partition (52) and the housing (38).

9. Combustion chamber assembly unit in accordance with one of the preceding claims, **characterized in that** a flame diaphragm (34) is provided with a flow-through opening (60) and that a waste gas return opening device (70) is provided in the axial area of the flame diaphragm (34) for returning combustion waste gases flowing in the waste gas backflow space (46) into the combustion chamber (18) or/and into the waste gas flow space (32).

10. Combustion chamber assembly unit in accordance with one of the preceding claims, **characterized in that** the bottom area (16) comprises an evaporator medium carrier (20) and a porous evaporator medium (22) on a side of the evaporator medium carrier (20) facing the combustion chamber (18), or/and that the housing (38) is an essentially pot-shaped heat exchanger housing with a bottom wall (40) located axially opposite a flame tube (30) and with a heat exchanger housing circumferential wall (42), which surrounds the flame tube (30) and defines the waste gas backflow space (46) radially outwardly.

11. Vehicle heater, comprising a combustion chamber assembly unit (10) in accordance with one of the preceding claims.

## Revendications

1. Unité d'assemblage de chambre de combustion pour un chauffage de véhicule fonctionnant au carburant, comprenant un boîtier de chambre de combustion (12) avec une chambre de combustion (18) délimitée par une paroi circonférentielle (14) et par une zone de fond (16), dans laquelle il est prévu un tube de flamme (30) en aval de la paroi circonférentielle (14) dans la direction d'un axe longitudinale de boîtier (L) et qui entoure un espace d'écoulement de gaz d'échappement (32) ouvert dans la direction de l'axe longitudinale de boîtier (L), dans lequel un espace de reflux de gaz d'échappement (46) est formé entre le tube de flamme (30) et un boîtier (38) entourant celui-ci, dans lequel l'espace d'écoulement de gaz d'échappement (32) est ouvert vers l'espace de reflux de gaz d'échappement (46) dans une première zone d'extrémité axiale (48) de l'espace de reflux de gaz d'échappement (46), dans lequel un agencement de catalyseur d'oxydation (54), à travers lequel les gaz d'échappement de combustion peuvent s'écouler, est prévu dans l'espace de reflux de gaz d'échappement (46) en aval par rapport à la chambre de combustion (18),
**caractérisé en ce que**
l'agencement de catalyseur d'oxydation (54) et un agencement de stockage d'hydrocarbures (74) ou/et un agencement de stockage d'oxyde d'azote (76) sont prévus dans une deuxième zone d'extrémité axiale (50) de l'espace de reflux de gaz d'échappement (46),
qu'un espace d'alimentation en air de combustion (28) entourant la paroi circonférentielle (14) est ouvert sur la chambre de combustion (18) par une pluralité d'ouvertures d'alimentation en air de combustion (26) prévues dans la paroi circonférentielle (14), et qu'une cloison (52) séparant l'espace d'alimentation en air de combustion (28) de l'espace de reflux de gaz d'échappement (46) est prévue, l'agencement de catalyseur d'oxydation (54) étant disposé de manière à entourer la cloison (52).

2. Unité d'assemblage de chambre de combustion selon la revendication 1, **caractérisée en ce que** l'agencement de stockage d'hydrocarbures (74) comprend un catalyseur de stockage d'hydrocarbures (78), dans lequel de préférence une température de désorption du catalyseur de stockage d'hydrocarbures (78) est supérieure à une température d'allumage de l'agencement de catalyseur d'oxydation (54).

3. Unité d'assemblage de chambre de combustion selon la revendication 2, **caractérisée en ce que** le catalyseur de stockage d'hydrocarbures (78) est constitué avec un matériau de zéolithe.

4. Unité d'assemblage de chambre de combustion selon l'une des revendications précédentes, **caractérisée en ce que** l'agencement de stockage d'oxyde d'azote (76) comprend un catalyseur de stockage d'oxyde d'azote (80).

5. Unité d'assemblage de chambre de combustion selon la revendication 4, **caractérisée en ce que** le catalyseur de stockage d'oxyde d'azote (80) est constitué avec du baryum.

6. Unité d'assemblage de chambre de combustion selon l'une des revendications précédentes, **caractérisée en ce que** l'agencement de stockage d'hydrocarbures (74) ou/et l'agencement de stockage d'oxyde d'azote (76) est disposé en amont par rapport à l'agencement de catalyseur d'oxydation (54).

7. Unité d'assemblage de chambre de combustion selon l'une des revendications précédentes, **caractérisée en ce que** l'agencement de catalyseur d'oxydation (54) est disposé de telle sorte qu'il jouxte axialement la cloison (52) ou/et **en ce que** l'agencement de stockage d'hydrocarbures (74) ou/et l'agencement de stockage d'oxyde d'azote (76) est disposé de telle sorte qu'il entoure la cloison (52).

8. Unité d'assemblage de chambre de combustion selon la revendication 7, **caractérisée en ce que** l'agencement de catalyseur d'oxydation (54) ou/et l'agencement de stockage d'hydrocarbures (74) ou/et l'agencement de stockage d'oxyde d'azote (76) est disposé entre la cloison (52) et le boîtier (38).

9. Unité d'assemblage de chambre de combustion selon l'une des revendications précédentes, **caractérisée en ce qu'**un diaphragme de flamme (34) est prévu avec une ouverture de passage (60) et qu'un agencement d'ouverture de reflux de gaz d'échappement (70) est prévu dans la zone axiale du diaphragme de flamme (34) pour le reflux des gaz d'échappement de combustion s'écoulant dans l'espace de reflux de gaz d'échappement (46) dans la chambre de combustion (18) ou/et dans l'espace d'écoulement de gaz d'échappement (32).

10. Unité d'assemblage de chambre de combustion selon l'une des revendications précédentes, **caractérisée en ce que** la zone de fond (16) comprend un support de milieu d'évaporation (20) et un milieu d'évaporation (22) poreux sur un côté du support de milieu d'évaporation (20) tourné vers la chambre de combustion (18), ou/et que le boîtier (38) est un boîtier d'échangeur de chaleur essentiellement en forme de pot avec une paroi de fond (40) située axialement à l'opposé d'un tube de flamme (30) et avec une paroi circonférentielle de boîtier d'échangeur de chaleur (42), qui entoure le tube de flamme (30) et définit l'espace de reflux de gaz d'échappement (46) radialement vers l'extérieur.

11. Chauffage de véhicule, comprenant une unité d'assemblage de chambre de combustion (10) selon l'une des revendications précédentes.
